# EUROPEAN PATENT SPECIFICATION

(11) **EP 0 409 422 B1**
(45) Date of publication and mention of the grant of the patent: **09.03.1994**
(21) Application number: 90306925.0
(22) Date of filing: 25.06.1990
(51) Int. Cl.: C03B 7/08

(54) **Feeder assembly for a glass container manufacturing machine**
Speiseanordnung für eine Hochglasfertigungsmaschine
Arrangement distributeur pour une machine afin de produire du verre creux

(30) Priority: 21.07.1989 US 383950
(43) Date of publication of application: 23.01.1991
(73) Proprietor: Emhart Glass Machinery Investments Inc., Wilmington, Delaware 19801 (US)
(72) Inventor: Menard, Alan W., Bolton, Connecticut 06043 (US); Suomala, John E., Simsbury, Connecticut 06070 (US); Walker, Richard A., North Granby, Connecticut 06060 (US)
(74) Representative: Randall, John Walter

(56) References cited:
- US-A- 4 551 163
- US-A- 4 682 998

## Description

The present invention relates to machinery for manufacturing glass containers such as bottles and in particular to machines known as individual section machines and to the feeders which feed molten glass received from a forehearth to such machines.

U.S. Patent 4551163 discloses a feeder assembly for delivering molten glass to an individual section glass container manufacturing machine which comprises a spout bowl, to which molten glass is fed and a tube having a horizontal bottom surface which together with a surface of the spout bowl defines an opening through which molten glass may flow. The tube is supported by a chuck assembly which is rotated to rotate the tube. The chuck assembly is supported relative to a jack housing by a thrust bearing, and the feeder assembly also comprises motor means for causing vertical movement of the jack housing thus to move the tube relative to the spout bowl

Both the spout bowl and the tube are made of refractory material, and are thus liable to wear unevenly. Consequently even when the tube is moved downwardly into contact with the spout bowl to cut off flow of molten glass, flow of such glass often continues. An operator, seeing such flow continuing, may conclude that the tube must be lowered still further to properly engage the spout bowl, and such further lowering of the tube may cause undesirable damage to either the spout bowl or the tube.

It is an object of the present invention to provide a feeder assembly wherein damage to the spout bowl or the tube by such operator misjudgment is prevented.

The present invention provides a feeder assembly for delivering molten glass to an individual section glass container manufacturing machine comprising a spout bowl
a tube which defines with the spout bowl an opening through which molten glass may flow
a chuck assembly which supports the tube means for rotating the chuck assembly
a jack housing
a thrust bearing between the jack housing and the chuck assembly supporting the chuck assembly for rotation relative to the jack housing
motor means for causing vertical movement of the jack housing thus to move the tube relative to the spout bowl
characterized in that
the feeder assembly comprises a detector device operating between the jack housing and the chuck assembly which detects relative vertical movement between the jack housing and the chuck assembly if the motor means operates to lower the tube into contact with the spout bowl and then causes the motor means to cease to so operate.

In a feeder assembly according to the invention it is preferred that the detector device comprises a plurality of detectors spaced circumferentially around the chuck assembly. Each detector preferably comprises a block to which air under pressure is fed, which block comprises an exit hole which is normally maintained closed but which is opened upon relative movement of the jack housing and the chuck assembly.

We prefer, in a feeder assembly according to the invention that the jack housing comprises a flat annular horizontal surface and the detector device comprises an annular ring, a plurality of pads secured to the ring which engage the surface, the annular ring comprising portions which extend over an upper race of the thrust bearing which race forms part of the chuck assembly, an air conduit which extends through each pad and through the ring to the surface, the arrangement being such that air under pressure is supplied to the air conduit and on relative movement of the jack housing and the chuck assembly on the tube being lowered into contact with the spout bowl, the ring will engage the upper race and further downward movement of the jack housing will cause at least one of the pads to be lifted off the horizontal surface, thus to cause a pressure drop in the air conduit which pressure drop provides a signal to stop operation of the motor means

The present invention will become more clear from the following description, to be read with reference to the accompanying drawings, of a feeder assembly embodying the invention.

In the accompanying drawings:

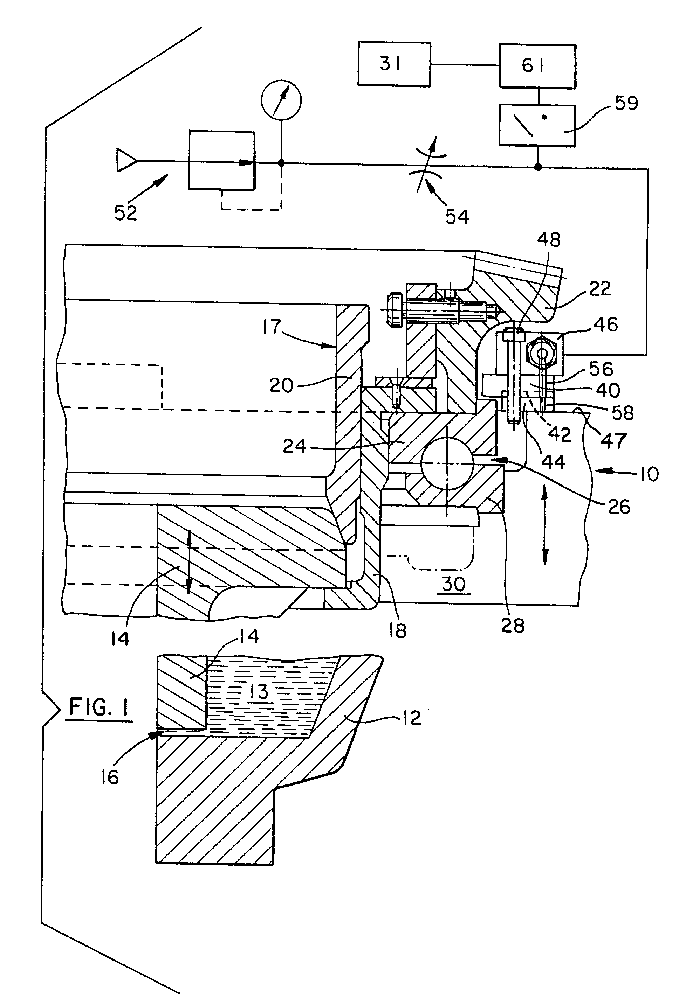

Figure 1 is an elevation cross-sectional view of a portion of a feeder assembly for feeding molten glass to an individual section machine or the like and

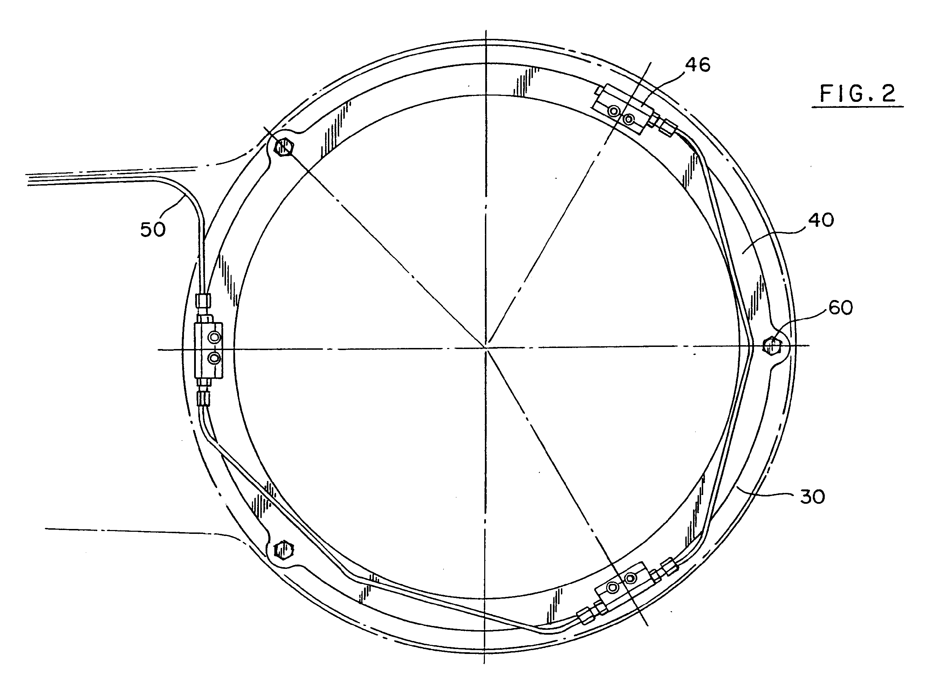

Figure 2 is a top view of a detector device shown in Figure 1.

The feeder assembly 10 which in general construction is similar to that disclosed in US Patent No. 4,551,163 comprises a spout bowl 12 into which molten glass 13 is poured. The molten glass is contained within the volume defined between the spout bowl 12 and a central tube 14. By controlling the axial location of the tube 14, an annular clearance 16 can be established between the tube 14 and the spout bowl 12 and a predetermined flow of molten glass will leave the feeder assembly. The tube 14 is supported by a suitable chuck assembly 17 which includes a support frame 18, a clamping member 20, a bevel gear 22 which is driven to rotate the tube 14, and the upper race 24 of an annular thrust bearing 26. All of these structural elements are connected for integral movement. A lower race 28 of the bearing 26 is supported on a jack housing 30 which is displaceable vertically up and down by a jack motor 31 to raise or lower the tube relative to the spout bowl 20

The feeder assembly comprises a detector device operating between the jack housing 30 and the chuck assembly 17 which detects relative vertical movement between the jack housing 30 and the chuck assembly 17 if the jack motor 31 operates to lower the tube 14 into contact with the spout bowl 12 and then causes the motor 31 to cease to operate. The detector device comprises a metal actuating ring .40 which extends around the chuck assembly 17. A lower surface of the ring 40 has keyways 42 cut therein at three equally spaced circumferential locations for receiving flat pads 44 which matingly engage a top horizontal surface 47 of the jack housing 30. At each of these locations a detector device 46 in the form of a tee is located on top of the ring 40: the tees, the ring 40 and the pads 44 are secured together by suitable cap screws 48. The tees 46 receive pressurized air via Lincoln tube lines 50 from a source of regulated shop air 52 and through a restrictor 54. The pressurized air passes through each tee 46 and through continuous holes 56, 58 in the ring 40 and pads 44. During normal operation, the weight of the ring 40 keeps the pads 44 against the housing 30 to block the air passages whereby a pressure switch 59 will sense the regulated shop air pressure. Once the jack housing 30 is lowered to the point that the tube strikes the spout bowl, further lowering of the jack housing with the intention of further lowering the tube will result in relative movement between the upper race 24 (which will no longer move) and the ring 40 which overlies the race and which, during normal operation, is slightly vertically spaced therefrom. This relative movement causes the upper race 24 to engage the ring 40 and lift it, thus to lift the pads 44 off the housing 30, opening the air hole to the atmosphere. Air pressure at the switch 59 will rapidly drop causing the switch 59 to issue a signal to a jack motor controller 61 indicating that the tube has struck the spout bowl, to switch off the motor 31 and to stop further tube advance, thereby preventing damage to the tube or the spout bowl. The pads 44 have sufficient size and thickness so that any distortion of the ring due to the high temperature environment will affect only the ring portions intermediate the pads without altering the mating relationship between the pads and the top jack housing surface. The ring is located by shoulder bolts 60 which are located intermediate the pads. These bolts 60 permit vertical movement of the ring.

## Claims

1. A feeder assembly (10) for delivering molten glass (13) to an individual section glass container manufaturing machine comprising
a spout bowl (12)
a tube (14) which defines with the spout bowl an opening (16) through which molten glass may flow
a chuck assembly (17) which supports the tube (14)
means for rotating the chuck assembly
a jack housing (30)
a thrust bearing (26) between the jack housing (30) and the chuck assembly (17) supporting the chuck assembly for rotation relative to the jack housing
motor means (31) for causing vertical movement of the jack housing thus to move the tube relative to the spout bowl
characterized in that
the feeder assembly (10) comprises a detector device (40,46) operating between the jack housing and chuck assembly which detects relative vertical movement between the jack housing (30) and the chuck assembly (17) if the motor means (31) operates to lower the tube (14) into contact with the spout bowl (12) and then causes the motor means (31) to cease to so operate.

2. A feeder assembly according to claim 1
characterized in that the detector device (40,46) comprises a plurality of detectors spaced circumferentially around the chuck assembly (17).

3. A feeder assembly according to claim 2
characterized in that each detector comprises a block (46) to which air under pressure is fed, which block comprises an exit hole which is normally maintained closed but which is opened upon relative movement of the jack housing (30) and the chuck assembly (17)

4. A feeder assembly according to claim 2
characterized in that the jack housing (30) comprises a flat annular horizontal surface (47) and the detector device comprises an annular ring (40), a plurality of pads (44) secured to the ring which engage the surface (47), the annular ring (40) comprising portions which extend over an upper race (24) of the thrust bearing (26) which race forms part of the chuck assembly (17), an air conduit (50) which extends through each pad (44) and through the ring (40) to the surface (47), the arrangement being such that air under pressure is supplied to the air conduit (50) and on relative movement of the jack housing (30) and the chuck assembly (17) on the tube (14) being lowered into contact with the spout bowl (12), the ring (40) will engage the upper race (24) and further downward movement of the jack housing (30) will cause at least one of the pads (44) to be lifted off the horizontal surface (47), thus to cause a pressure drop in the air conduit (50) which pressure drop provides a signal to stop operation of the motor means (31).

5. A feeder assembly according to claim 4 characterized in that air is supplied to the conduit (50) through a restrictor (54) and the conduit (50) extends through a tee (46) to each pad (44).

## Patentansprüche

1. Zuführbaugruppe (10) zum Liefern geschmolzenen Glases (13) zu einer I.S.-Fertigungsmaschine für Glasbehälter, die aufweist:
eine Außgußschüssel (12);
eine Röhre (14), die mit der Ausgußschüssel eine Öffnung (16) definiert, durch die geschmolzenes Glas fließen kann;
eine Spannfutterbaugruppe (17), die die Röhre (14) stützt;
eine Einrichtung zum Rotieren der Spannfutterbaugruppe;
ein Mantelgehäuse (30);
ein Schublager (26) zwischen dem Mantelgehäuse (30) und der Spannfutterbaugruppe (17), das die Spannfutterbaugruppe zur Rotation relativ zu dem Mantelgehäuse stützt;
eine Motoreinrichtung (31) zum Veranlassen einer vertikalen Bewegung des Mantelgehäuses, um so die Röhre relativ zu der Ausgußschüssel zu bewegen,
**dadurch gekennzeichnet**, daß
die Zuführbaugruppe (10) eine Detektorvorrichtung (40, 46) aufweist, die zwischen dem Mantelgehäuse und der Spannfutterbaugruppe arbeitet, die eine relative vertikale Bewegung zwischen dem Mantelgehäuse (30) und der Spannfütterbaugruppe (17) erfaßt, wenn die Motoreinrichtung (31) arbeitet, um die Röhre (14) in einen Kontakt mit der Ausgußschüssel (12) abzusenken, und die bewirkt, daß dann die Motoreinrichtung (31) aufhört zu arbeiten.

2. Zuführbaugruppe gemäß Anspruch 1, dadurch gekennzeichnet, daß die Detektorvorrichtung (40, 46) eine Vielzahl von Detektoren aufweist, die umfangsmäßig um die Spannfutterbaugruppe (17) beabstandet sind.

3. Zuführbaugruppe nach Anspruch 2, dadurch gekennzeichnet, daß jeder Detektor einen Block (46) aufweist, zu dem Luft unter Druck zugeführt wird, wobei der Block eine Ausgangsbohrung aufweist, die normalerweise geschlossen gehalten wird, aber die auf eine Relativbewegung des Mantelgehäuses (30) und der Spannfutterbaugruppe hin geöffnet wird.

4. Zuführbaugruppe nach Anspruch 2, dadurch gekennzeichnet, daß das Mantelgehäuse (30) eine flache ringförmige horizontale Oberfläche (47) aufweist, und daß die Detektorvorrichtung aufweist: einen kreisförmigen Ring (40), eine Vielzahl von Unterlegstücken (44), die an dem Ring befestigt sind, die an der Oberfläche (47) anliegen, wobei der kreisförmige Ring (40) Abschnitte aufweist, die sich über einen oberen Kugellagerlaufring (24) des Schublagers (26) erstrecken, wobei der Kugellagerlaufring einen Teil der Spannfutterbaugruppe (17) bildet, eine Luftleitung (50), die sich durch jedes Unterlegstück (44) und durch den Ring (40) zu der Oberfläche (47) erstreckt, wobei die Anordnung derart ist, daß Luft unter Druck zu der Luftleitung (50) und bei einer Relativbewegung des Mantelgehäuses (30) zugeführt wird, und wobei die Spannutterbaugruppe (17) an der Röhre (14) in einen Kontakt mit der Ausgußschüssel (12) abgesenkt wird, und zwar wird der Ring (40) an dem oberen Kugellagerlaufring (24) anlegen, und eine weitere Abwärtsbewegung des Mantelgehäuses (30) wird bewirken, daß wenigstens eines der Unterlegstücke (44) von der horizontalen Oberfläche (47) weg angehoben wird, um so einen Druckabfall in der Luftleitung (50) zu bewirken, wobei der Druckabfall ein Signal bereitstellt, den Betrieb der Motoreinrichtung (31) zu stoppen.

5. Zuführbaugruppe gemäß Anspruch 4, dadurch gekennzeichnet, daß Luft zu der Leitung (50) durch einen Begrenzer (54) zugeführt wird, und daß die Leitung (50) sich durch ein T-Stück zu jedem Unterlegstück erstreckt.

## Revendications

1. Dispositif d'alimentation (10) servant à distribuer du verre fondu (13) à une machine sectionnelle de fabrication de récipients en verre, comprenant une cuvette à jaillissement (12), un tube (14), délimitant avec la cuvette à jaillissement une ouverture (16) par laquelle du verre fondu peut s'écouler, un mandrin de serrage (17), soutenant le tube (14), des moyens servant à entraîner le mandrin de serrage en rotation, un boîtier de vérin (30), un palier de butée (26), disposé entre le boîtier de vérin (30) et le mandrin de serrage (17) et servant à soutenir ce mandrin de serrage de façon qu'il puisse se déplacer en rotation vis-à-vis du boîtier de vérin, et un moteur (31) servant à provoquer un déplacement vertical du boîtier de vérin, de façon à déplacer ainsi le tube vis-à-vis de la cuvette à jaillissement, ce dispositif d'alimentation (10) étant caractérisé en ce qu'il comprend un dispositif détecteur (40,46) qui fonctionne entre le boîtier de vérin et le mandrin de serrage et qui détecte un déplacement relatif vertical entre le boîtier de vérin (30) et le mandrin de serrage (17) si le moteur (31) fonctionne de façon à abaisser le tube (14) au contact de la cuvette à jaillissement (12), puis provoque alors une interruption de ce fonctionnement du moteur (31).

2. Dispositif d'alimentation suivant la revendication 1, caractérisé en ce que le dispositif détecteur (40, 46) comprend plusieurs détecteurs espacés dans le sens circonférentiel tout autour du mandrin de serrage (17).

3. Dispositif d'alimentation suivant la revendication 2, caractérisé en ce que chaque détecteur comprend un bloc (46) auquel de l'air comprimé est envoyé, ce bloc comprenant un orifice de sortie qui est normalement maintenu fermé, mais qui est ouvert lors d'un déplacement relatif du boîtier de vérin (30) et du mandrin de serrage (17).

4. Dispositif d'alimentation suivant la revendication 2, caractérisé en ce que le boîtier de vérin (30) comprend une surface annulaire plane horizontale (47) et que le dispositif détecteur comprend une bague annulaire (40), plusieurs patins (44), fixés à la bague et venant au contact de la surface (47), la bague annulaire (40) comportant des parties qui s'étendent au-dessus d'un chemin de roulement supérieur (24) du palier de butée (26), ce chemin de roulement faisant partie du mandrin de serrage (17), et un conduit d'air (50) qui traverse chaque patin (44) et traverse la bague (40) pour parvenir à la surface (47), l'agencement étant tel que de l'air comprimé est envoyé au conduit d'air (50) et que, lors d'un déplacement relatif du boîtier de vérin (30) et du mandrin de serrage (17) lorsque le tube (14) est abaissé au contact de la cuvette à jaillissement (12), la bague (40) vient au contact du chemin de roulement supérieur (24), tandis qu'un déplacement supplémentaire du boîtier de vérin (30) vers le bas fait se soulever de la surface horizontale (47) au moins l'un des patins (44), ce qui provoque une chute de pression dans le conduit d'air (50), cette chute de pression fournissant un signal permettant de faire cesser le fonctionnement du moteur (31).

5. Dispositif d'alimentation suivant la revendication 4, caractérisé en ce que de l'air est fourni au conduit (50) par l'intermédiaire d'un étranglement (54) et en ce que le conduit (50) s'étend jusqu'à chaque patin (44) par l'intermédiaire d'un té (46).
